# EUROPEAN PATENT APPLICATION

(11) **EP 4 834 992 A1**
(43) Date of publication of application: **04.11.2026**
(21) Application number: 24912742.4
(22) Date of filing: 23.12.2024
(51) Int. Cl.: C08L 27/12, C08F 214/18, C08K 5/02, C08K 5/17, C08K 5/49

(54) **FLUORINE-CONTAINING COPOLYMER COMPOSITION, CROSSLINKABLE COMPOSITION AND CROSSLINKED RUBBER ARTICLE**

(30) Priority: 27.12.2023 JP 2023221216
(71) Applicant: AGC Inc., Chiyoda-ku Tokyo 100-8405 (JP)
(72) Inventor: TAMURA, Tasuku, Tokyo 100-8405 (JP); KAWAI, Tsuyoshi, Tokyo 100-8405 (JP)
(74) Representative: Müller-Boré & Partner Patentanwälte PartG mbB
(86) International application number: PCT/JP2024/045509
(87) International publication number: WO 2025/142855

(57) **Abstract**

Provided are a fluorine-containing copolymer composition that, when combined with a crosslinking agent, can produce a crosslinkable composition capable of forming crosslinked rubber articles less likely to adhere to contacted objects, and a crosslinked rubber article less likely to adhere to contacted objects. The fluorine-containing copolymer composition contains: a fluorine-containing copolymer (A) including units based on tetrafluoroethylene and units based on perfluoro(alkyl vinyl ether); and a fluorine-containing copolymer (B) being different from the fluorine-containing copolymer (A) and including units based on a monomer having at least one functional group selected from the group consisting of a carboxy group and a group represented by the formula (X), units based on tetrafluoroethylene and units based on perfluoro(alkyl vinyl ether), wherein the fluorine-containing copolymer composition has a predetermined storage modulus.

*-CO-O-CO-* (X)

In the formula (X), * represents a bonding position.

## Description

### TECHNICAL FIELD

The present invention relates to a fluorine-containing copolymer composition, a crosslinkable composition and a crosslinked rubber article.

### BACKGROUND ART

Crosslinked rubber articles obtained by crosslinking fluorine-containing copolymers are excellent in heat resistance, chemical resistance, oil resistance, weather resistance and the like, and thus are widely used as sealing materials (for example, O-rings, packings, oil seals and gaskets) and cushioning materials in the fields of vehicles, ships, aircraft, general machinery, architecture and the like.

As a crosslinkable composition for forming such crosslinked rubber articles, Patent Document 1 discloses a crosslinkable composition containing a specific fluorine-containing copolymer.

### PRIOR ART DOCUMENTS

### PATENT DOCUMENTS

Patent Document 1: WO2021/210502

### DISCLOSURE OF INVENTION

### TECHNICAL PROBLEM

The present inventors have assessed the properties of the composition disclosed in Patent Document 1 and found that crosslinked rubber articles formed from this composition readily adhere to contacted objects and therefore require improvement. For example, in the case where crosslinked rubber articles formed from the composition disclosed in Patent Document 1 are used as O-rings in semiconductor devices, a problem arises in that the O-rings tend to adhere to movable members, such as doors and lids of the semiconductor devices, making the movable members difficult to move, for example, making the doors difficult to open.

It is accordingly an object of the present invention to provide a fluorine-containing copolymer composition that, when combined with a crosslinking agent, can produce a crosslinkable composition capable of forming crosslinked rubber articles less likely to adhere to contacted objects.

It is also an object of the present invention to provide such a crosslinkable composition and such a crosslinked rubber article.

### SOLUTION TO PROBLEM

As a result of intensive studies, the present inventors have found the following solutions to the above-described problem.
(1) A fluorine-containing copolymer composition comprising:
   a fluorine-containing copolymer (A) comprising units based on tetrafluoroethylene and units based on perfluoro(alkyl vinyl ether); and
   a fluorine-containing copolymer (B), which is a fluorine-containing copolymer different from the fluorine-containing copolymer (A), comprising units based on a monomer having at least one functional group selected from the group consisting of a carboxy group and a group represented by the formula (X) described below, units based on tetrafluoroethylene and units based on perfluoro(alkyl vinyl ether),
   wherein a measurement sample comprising the fluorine-containing copolymer (A) and the fluorine-containing copolymer (B) has a storage modulus of 650 kPa or lower at 100°C with the proviso that the mass ratio of the content of the fluorine-containing copolymer (B) to the content of the fluorine-containing copolymer (A) in the measurement sample is the same as the mass ratio of the content of the fluorine-containing copolymer (B) to the content of the fluorine-containing copolymer (A) in the fluorine-containing copolymer composition.
(2) The fluorine-containing copolymer composition according to (1),
   wherein the fluorine-containing copolymer (A) comprises units having nitrile groups, and
   wherein the content of the units having nitrile groups to all units in the fluorine-containing copolymer (A) is 0.14 mol% or more and less than 0.7 mol%.
(3) The fluorine-containing copolymer composition according to (1) or (2),
   wherein the content of the units based on the monomer having at least one functional group selected from the group consisting of a carboxy group and a group represented by the formula (X) to all units in the fluorine-containing copolymer (B) is 0.01 to 3 mol%,
   wherein the content of the units based on tetrafluoroethylene to all units in the fluorine-containing copolymer (B) is 90 to 99.89 mol%, and
   wherein the content of the units based on perfluoro(alkyl vinyl ether) to all units in the fluorine-containing copolymer (B) is 0.1 to 9.99 mol%.
(4) The fluorine-containing copolymer composition according to any one of (1) to (3), further comprising a compound represented by the formula (9) described below.
(5) The fluorine-containing copolymer composition according to (4), wherein the content of the compound represented by the formula (9) is 0.1 to 5 parts by mass per 100 parts by mass of the fluorine-containing copolymer (A).
(6) The fluorine-containing copolymer composition according to any one of (1) to (5), further comprising a phosphorus compound having a melting point of 60°C or lower.
(7) The fluorine-containing copolymer composition according to (6), wherein the content of the phosphorus compound is 0.2 to 5 parts by mass per 100 parts by mass of the fluorine-containing copolymer (A).
(8) The fluorine-containing copolymer composition according to any one of (1) to (7), wherein the content of the fluorine-containing copolymer (B) is 2 to 50 parts by mass per 100 parts by mass of the fluorine-containing copolymer (A).
(9) A crosslinkable composition comprising: the fluorine-containing copolymer composition according to any one of (1) to (8); and a crosslinking agent.
(10) The crosslinkable composition according to (9), wherein the crosslinking agent is a compound having two or more amino groups.
(11) The crosslinkable composition according to (9) or (10), wherein the content of the crosslinking agent is 0.3 to 10 parts by mass per 100 parts by mass of the fluorine-containing copolymer (A).
(12) A crosslinkable composition comprising:
   a fluorine-containing copolymer (A) comprising units based on tetrafluoroethylene and units based on perfluoro(alkyl vinyl ether);
   a fluorine-containing copolymer (B), which is a fluorine-containing copolymer different from the fluorine-containing copolymer (A), comprising units based on a monomer having at least one functional group selected from the group consisting of a carboxy group and a group represented by the formula (X): *-CO-O-CO-* where * represents a bonding position, units based on tetrafluoroethylene and units based on perfluoro(alkyl vinyl ether); and
   a crosslinking agent,
   wherein a crosslinked rubber article formed from the crosslinkable composition exhibits a recovery of less than 80% in a recovery test after being held at 25% compression at 200°C for 70 hours.
(13) A crosslinked rubber article formed from the crosslinkable composition according to any one of (9) to (12).

### ADVANTAGEOUS EFFECTS OF INVENTION

According to the present invention, it is possible to provide a fluorine-containing copolymer composition that, when combined with a crosslinking agent, can produce a crosslinkable composition capable of forming crosslinked rubber articles less likely to adhere to contacted objects.

According to the present invention, it is also possible to provide such a crosslinkable composition and such a crosslinked rubber article.

### DESCRIPTION OF EMBODIMENTS

The terms used in the present invention have the following meanings.

A "unit" is a generic term for an atomic group derived from one molecule of monomer, which is formed directly by polymerization of the monomer, and an atomic group obtained by chemical conversion of a part of the aforementioned atomic group. A "unit based on a monomer" is hereinafter also simply referred to as a "unit".

A "rubber" refers to a rubber material having properties as defined in JIS K6200: 2008, and is distinguished from a "resin".

A "melting point" refers to a temperature corresponding to the maximum value of a melting peak measured by differential scanning calorimetry (DSC).

A "boiling point" refers to a temperature measured by the equilibrium reflux boiling point test method, and more specifically, measured in accordance with Section 8.1 of JIS K2233: 2017. In the case where a pressure is indicated after the boiling point, the boiling point corresponds to a value measured under the indicated pressure. Unless otherwise specified, the value measured by the method defined in Section 8.1 of JIS K2233: 2017 is converted to a boiling point at 760 mmHg.

A "(meth)acrylate" is a generic term for an acrylate and a methacrylate. Similarly, "(meth)acryloyl" is a generic term for acryloyl and methacryloyl.

### [Fluorine-Containing Copolymer Composition]

A fluorine-containing copolymer composition of the present invention (hereinafter also referred to as the "present composition") contains: a fluorine-containing copolymer (A) (hereinafter also referred to as a "copolymer (A)") including units based on tetrafluoroethylene and units based on perfluoro(alkyl vinyl ether); and a fluorine-containing copolymer (B) (hereinafter also referred to as a "copolymer (B)), different from the copolymer (A), including units based on a monomer having at least one functional group selected from the group consisting of a carboxy group and a group represented by the formula (X) described below, units based on tetrafluoroethylene and units based on perfluoro(alkyl vinyl ether).

Furthermore, the present composition has a storage modulus of 650 kPa or lower at 100°C

A crosslinked rubber article formed from a crosslinkable composition that combines the present composition with a crosslinking agent is less likely to adhere to contacted objects.

The present inventors have found that the above-described storage modulus of the present composition is correlated with the adhesion of crosslinked rubber articles formed from a crosslinkable composition, which combines the present composition with a crosslinking agent, to contacted objects. More specifically, the present inventors have found that, when the above-described storage modulus is lower than or equal to the specified value, crosslinked rubber articles formed from a crosslinkable composition that combines the present composition with a crosslinking agent are less likely to adhere to contacted objects.

Although the detailed reason for such a correlation is not clear, it is presumed that the above-described storage modulus is related to the dispersion state of the copolymers (A) and (B). It is further considered that, depending on this dispersion state, the resulting crosslinked rubber article is readily shrinkable upon heating or cooling. It is therefore presumed that, when the present composition is in a dispersion state in which the above-described storage modulus falls within the specified range, a crosslinked rubber article formed from a crosslinkable composition that combines the present composition with a crosslinking agent will readily shrink upon heating or cooling under conditions similar to those for the use of O-rings and the like. As a result, the contact area between the crosslinked rubber article and contacted objects is reduced, thereby making the crosslinked rubber article less likely to adhere to contacted objects.

### <Copolymer (A)>

The present composition contains a copolymer (A).

The copolymer (A) is a polymer including units based on tetrafluoroethylene (hereinafter also referred to as "TFE") and units based on perfluoro(alkyl vinyl ether) (hereinafter also referred to as "PAVE").

The copolymer (A) itself does not fully return to its original shape when stretched, but upon crosslinking, exhibits the ability to readily return to its original shape, that is, exhibits rubber properties.

With a view to achieving the superior effects of the present invention, the copolymer (A) preferably includes units having nitrile groups in addition to the units based on the TFE monomer and the units based on the PAVE monomer.

With a view to achieving the superior effects of the present invention, the copolymer (A) preferably includes no units based on a monomer having a carboxy group and a group represented by the formula (X) described below.

The PAVE units are units based on perfluoro(alkyl vinyl ether).

From the viewpoint of high polymerization reactivity and good rubber properties, PAVE is preferably a monomer represented by the formula (1).

CF₂=CF-O-R^{f1} (1)

In the formula (1), R^{f1} represents a C₁₋₁₀ perfluoroalkyl group.

The number of carbon atoms in R^{f1} is preferably 1 to 8, more preferably 1 to 6, still more preferably 1 to 5, particularly preferably 1 to 3, from the viewpoint of higher polymerization reactivity.

The perfluoroalkyl group may be linear or branched.

Specific examples of PAVE include perfluoro(methyl vinyl ether) (hereinafter also referred to as "PMVE"), perfluoro(ethyl vinyl ether) (hereinafter also referred to as "PEVE") and perfluoro(propyl vinyl ether) (hereinafter also referred to as "PPVE"). Among these, PMVE and PPVE are preferred.

The units having nitrile groups are units based on a monomer (hereinafter also referred to as "R_{CN}") having a nitrile group. With a view to achieving the superior effects of the present invention, R_{CN} preferably has a fluorine atom, and is more preferably a monomer represented by the formula (2).

CR²¹R²²=CR²³-R²⁴-CN (2)

In the formula (2), R²¹, R²² and R²³ each independently represent a hydrogen atom, a fluorine atom or a methyl group; and R²⁴ represents a divalent C₁₋₁₀ perfluorohydrocarbon group which may have an etheric oxygen atom at a terminal end or between carbon atoms thereof.

From the viewpoint of high polymerization reactivity of R_{CN}, R²¹, R²² and R²³ are each preferably a fluorine atom or a hydrogen atom, and more preferably, all of R²¹, R²² and R²³ are fluorine atoms or hydrogen atoms. All of R²¹, R²² and R²³ are particularly preferably fluorine atoms from the viewpoint of higher releasability and heat resistance of the resulting crosslinked rubber article.

R²⁴ may be linear, branched or cyclic, and is preferably linear or branched. The number of carbon atoms in R²⁴ is preferably 2 to 8, more preferably 3 to 7, still more preferably 3 to 6, particularly preferably 3 to 5.

R²⁴ may or may not have an etheric oxygen atom, and preferably has an etheric oxygen atom from the viewpoint of better rubber properties of crosslinked rubber articles formed from a crosslinkable composition that combines the present composition with a crosslinking agent.

The number of etheric oxygen atoms in R²⁴ is preferably 1 to 3, more preferably 1 or 2.

Specific examples of the monomer represented by the formula (2) include CF₂=CFOCF₂CF(CF₃)OCF₂CF₂CN (hereinafter also referred to as "8CNVE"), CF₂=CFO(CF₂)₅CN (hereinafter also referred to as "MV5CN"), CF₂=CFOCF₂CF₂CF₂OCF(CF₃)CN and CF₂=CFO(CF₂)₃CN. From the viewpoint of higher releasability and heat resistance of the crosslinked rubber article, 8CNVE and MV5CN are preferred.

The copolymer (A) may include units based on a monomer (hereinafter also referred to as an "additional monomer") other than the above monomers. Specific examples of the additional monomer include vinylidene fluoride (hereinafter also referred to as "VdF"), hexafluoropropylene (hereinafter also referred to as "HFP"), chlorotrifluoroethylene, a monomer (hereinafter also referred to as "BO") having two or more polymerizable unsaturated bonds, a monomer represented by the following formula (6), ethylene and propylene. Furthermore, a monomer having a halogen atom (hereinafter also referred to as "other halogen-containing monomer"), other than the above monomers, may also be mentioned (examples of which include bromotrifluoroethylene and iodotrifluoroethylene).

BO units are units based on a monomer having two or more polymerizable unsaturated bonds.

As specific examples of the polymerizable unsaturated bonds, carbon-carbon double bond (C=C) and carbon-carbon triple bond (C≡C) may be mentioned.

From the viewpoint of higher polymerization reactivity, the number of polymerizable unsaturated bonds in BO is preferably 2 to 6, more preferably 2 or 3, particularly preferably 2.

BO preferably further has a fluorine atom.

BO is preferably a monomer represented by the formula (3).

(CR³¹R³²=CR³³)ₐ₃R³⁴ (3)

In the formula (3), R³¹, R³² and R³³ each independently represent a hydrogen atom, a fluorine atom, a methyl group or a trifluoromethyl group; a3 represents an integer of 2 to 6; and R³⁴ represents a (a3)-valent C₁₋₁₀ perfluorohydrocarbon group which may have an etheric oxygen atom at a terminal end or between carbon atoms thereof. The plurality of R³¹, the plurality of R³² and the plurality of R³³ may be the same as or different from one another, and are preferably the same as one another.

a3 is preferably 2 or 3, particularly preferably 2.

From the viewpoint of higher polymerization reactivity of BO, R³¹, R³² and R³³ are each preferably a fluorine atom or a hydrogen atom, and more preferably, all of R³¹, R³² and R³³ are fluorine atoms or hydrogen atoms. Particularly preferably, all of R³¹, R³² and R³³ are fluorine atoms from the viewpoint of heat resistance and chemical resistance of the resulting crosslinked rubber article.

R³⁴ may be linear, branched or cyclic, and is preferably linear or branched, particularly preferably linear. The number of carbon atoms in R³⁴ is preferably 2 to 10, more preferably 3 to 8, still more preferably 3 to 6, particularly preferably 3 to 5.

R³⁴ may have or may not have an etheric oxygen atom, and preferably has an etheric oxygen atom from the viewpoint of higher crosslinking reactivity and better rubber properties.

The number of etheric oxygen atoms in R³⁴ is preferably 1 to 6, more preferably 1 to 3, particularly preferably 1 or 2. The etheric oxygen atom is preferably located at a terminal of R³⁴.

As preferred examples of the monomer represented by the formula (3), a monomer represented by the formula (4) and a monomer represented by the formula (5) may be mentioned.

(CF₂=CF)₂R⁴¹ (4)

In the formula (4), R⁴¹ represents a divalent C₂₋₁₀ perfluorohydrocarbon group which may have an etheric oxygen atom at a terminal end or between carbon atoms thereof.

Specific examples of the monomer represented by the formula (4) include CF₂=CFO(CF₂)₂OCF=CF₂, CF₂=CFO(CF₂)₃OCF=CF₂ (hereinafter also referred to as "C3DVE"), CF₂=CFO(CF₂)₄OCF=CF₂, CF₂=CFO(CF₂)₆OCF=CF₂, CF₂=CFO(CF₂)₈OCF=CF₂, CF₂=CFO(CF₂)₂OCF(CF₃)CF₂OCF=CF₂, CF₂=CFO(CF₂)₂O(CF(CF₃)CF₂O)₂CF=CF₂, CF₂=CFOCF₂O(CF₂CF₂O)₂CF=CF₂, CF₂=CFO(CF₂O)₃O(CF(CF₃)CF₂O)₂CF=CF₂, CF₂=CFOCF₂CF(CF₃)O(CF₂)₂OCF(CF₃)CF₂OCF=CF₂ and CF₂=CFOCF₂CF₂O(CF₂O)₂CF₂CF₂OCF=CF₂.

Among these examples of the monomer represented by the formula (4), preferred are CF₂=CFO(CF₂)₃OCF=CF₂ and CF₂=CFO(CF₂)₄OCF=CF₂.

(CH₂=CH)₂R⁵¹ (5)

In the formula (5), R⁵¹ represents a divalent C₂₋₁₀ perfluorohydrocarbon group which may have an etheric oxygen atom at a terminal end or between carbon atoms thereof.

Specific examples of the monomer represented by the formula (5) include CH₂=CH(CF₂)₂CH=CH₂, CH₂=CH(CF₂)₄CH=CH₂ and CH₂=CH(CF₂)₆CH=CH₂.

As these examples of the monomer represented by the formula (5), preferred is CH₂=CH(CF₂)₆CH=CH₂.

By copolymerizing BO, the terminal polymerizable double bonds of BO react during the polymerization to form the copolymer (A) with a branched chain.

The formula (6) is as shown below.

CF₂=CF-O-R^{f6} (6)

In the formula (6), R^{f6} represents a C₁₋₈ perfluoroalkyl group having one to five etheric oxygen atoms. The number of carbon atoms in R^{f6} is preferably 1 to 6, particularly preferably 1 to 5.

Specific examples of the monomer represented by the formula (6) include perfluoro(3,6-dioxa-1-heptene), perfluoro(3,6-dioxa-1-octene) and perfluoro(5-methyl-3,6-dioxa-1-nonene).

With a view to achieving the superior effects of the present invention, the contents of the TFE units to all units in the copolymer (A) is preferably 60 to 68 mol%, more preferably 62 to 67%, particularly preferably 63 to 67 mol%, most preferably 64 to 66 mol%. When the content of the TFE units falls within the above range, the storage modulus of the fluorine-containing copolymer composition at 100°C can be readily adjusted to 650 kPa or lower.

The contents of the PAVE units to all units in the copolymer (A) is preferably 32 to 40 mol%, more preferably 33 to 38 mol%, particularly preferably 33 to 37 mol%, most preferably 34 to 36 mol%, with a view to achieving the superior effects of the present invention. In the case where PMVE or PPVE is used as PAVE, the preferable content is the same as above.

In the case where the copolymer (A) contains R_{CN} units, the content of the R_{CN} units to all units in the copolymer (A) is preferably 0.05 to 5 mol%, more preferably 0.1 to 3 mol%, particularly preferably 0.2 to 1.5 mol%, with a view to achieving the superior effects of the present invention.

In the case where the fluorine-containing copolymer contains units based on the additional monomer, the content of the units based on the additional monomer to all units in the fluorine-containing copolymer is preferably 0.01 to 20 mol%, more preferably 0.5 to 10 mol%, particularly preferably 1 to 5 mol%, with a view to achieving the superior effects of the present invention.

In the fluorine-containing copolymer (A), the content of the R_{CN} units to all units in the copolymer (A) is preferably 0.14 mol% or more and less than 0.7 mol%.

With a view to achieving the superior effects of the present invention, the copolymer (A) is a perfluorinated polymer.

The "perfluorinated polymer" refers to a polymer having a chain of carbon atoms as a main chain, with substantially no hydrogen atoms bonded to carbon atoms and fluorine atoms substituted for hydrogen atoms. The perfluorinated polymer may have polyvalent atoms other than carbon on its side chain. As such polyvalent atoms, oxygen atoms are preferred.

Here, the expression "substantially no hydrogen atoms" means that the content of hydrogen atoms in the perfluorinated polymer is 0.5 mass% or less. The content of hydrogen atoms in the perfluorinated polymer is preferably 0.1 mass% or less, more preferably 0.07 mass% or less, particularly preferably 0.05 mass% or less. When the hydrogen content falls within the above range, high heat resistance and chemical resistance can be easily achieved.

The copolymer (A) may have iodine atoms. In this case, the iodine atoms are preferably present at terminals of polymer chains of the copolymer (A).

The iodine atoms may be derived from an iodine compound that serves as a chain transfer agent described later, or may be derived from an iodine-containing monomer such as iodotrifluoroethylene among the above-described other halogen-containing monomers. The iodine atoms are preferably derived from an iodine compound that serves as a chain transfer agent.

In the case where the copolymer (A) have iodine atoms, the content of the iodine atoms is preferably 0.01 to 5.0 mass%, more preferably 0.05 to 2.0 mass%, particularly preferably 0.05 to 1.0 mass%, based on the total mass of the copolymer (A). When the iodine content falls within the above range, the copolymer (A) shows improved crosslinking reactivity, leading to excellent mechanical properties of the resulting crosslinked rubber article.

The content of the copolymer (A) is preferably 60 to 99 mass%, more preferably 70 to 95 mass%, particularly preferably 80 to 90 mass%, based on the total mass of the present composition.

### (Method for Producing Copolymer (A))

As an example of a method for producing the copolymer (A), a method may be mentioned in which the above-described monomers are copolymerized in the presence of a radical polymerization initiator.

The radical polymerization initiator is preferably a water-soluble polymerization initiator or a redox polymerization initiator.

Specific examples of the water-soluble polymerization initiator include: persulfates such as ammonium persulfate, sodium persulfate and potassium persulfate; and organic polymerization initiators such as disuccinic peroxide and azobisisobutylamidine dihydrochloride. Among these, persulfates are preferred, and ammonium persulfate is particularly preferred.

The redox polymerization initiator may be a polymerization initiator that combines a persulfate with a reducing agent, and is particularly preferably of the type capable of polymerizing each monomer at a polymerization temperature ranging from 0 to 85°C. Specific examples of the persulfate constituting the redox polymerization initiator include ammonium persulfate, alkali metal persulfates such as sodium persulfate and potassium persulfate. Among these, ammonium persulfate is preferred. Specific examples of the reducing agent to be combined with the persulfate include thiosulfates, sulfites, bisulfites, pyrosulfites and hydroxymethanesulfinate salts. Among these, hydroxymethanesulfinates are preferred, and sodium hydroxymethanesulfinate is particularly preferred.

In the method for producing the copolymer (A), the above-described monomers may be copolymerized in the presence of a chain transfer agent along with the radical polymerization initiator.

The chain transfer agent is preferably an iodine compound, particularly preferably an iodine compound represented by the formula RI₂ where R represents an alkylene or perfluoroalkylene group having at least three (preferably 3 to 8) carbon atoms.

Specific examples of the iodine compound represented by the formula RI₂ include 1,3-diiodopropane, 1,4-diiodobutane, 1,6-diiodohexane, 1,8-diiodooctane, 1,3-diiodoperfluoropropane, 1,4-diiodoperfluorobutane, 1,6-diiodoperfluorohexane and 1,8-diiodoperfluorooctane.

As the iodine compound, an iodine compound having a perfluoroalkylene group is preferred, and 1,4-diiodoperfluorobutane is particularly preferred.

When the above-described monomers are copolymerized in the presence of such an iodine compound, iodine atoms can be introduced into the copolymer (A).

For details of components other than the above-described components used in the production of the copolymer (A) and for details of the production method of the copolymer (A), reference may be made to paragraphs [0019] to [0034] of WO2010/082633.

### <Copolymer (B)>

The present composition contains a copolymer (B).

The copolymer (B) includes units based on a monomer (hereinafter referred to as "Rx") having at least one functional group (hereinafter also referred to as a "specific functional group") selected from the group consisting of a carboxy group and a group represented by the formula (X), TFE units and PAVE units.

*-CO-O-CO-* (X)

In the formula (X), * represents a bonding position.

Rx may have a plurality of specific functional groups. In the case where Rx has a plurality of specific functional groups, the plurality of specific functional groups may be the same as or different from one another.

Rx, which is used as a monomer, has a polymerizable unsaturated bond. Specific examples of the polymerizable unsaturated bond are as described above.

Rx is preferably a compound having one specific functional group and one polymerizable unsaturated bond.

Examples of the monomer having a carboxy group include: unsaturated dicarboxylic acids such as itaconic acid, citraconic acid, 5-norbornene-2,3-dicarboxylic acid and maleic acid; unsaturated monocarboxylic acids such as acrylic acid and methacrylic acid; and CF₂=CFOR^{fx}CO₂H (where R^{fx} represents a C₁₋₁₀ perfluoroalkylene group which may have an etheric oxygen atom).

As a group represented by the formula (X), a group formed by removing one hydrogen atom from an acid anhydride may is preferred.

Examples of the monomer having a group represented by the formula (X) include anhydrides of unsaturated dicarboxylic acids, such as itaconic anhydride (hereinafter also referred to as "IAH"), citraconic anhydride (hereinafter also referred to as "CAH"), 5-norbornene-2,3-dicarboxylic anhydride (also known as Nadic anhydride; hereinafter also referred to as "NAH") and maleic anhydride.

In view of the reactivity with nitrile groups of the copolymer (A), Rx is preferably a monomer having a group represented by the formula (X). In particular, Rx more preferably includes at least one selected from the group consisting of IAH, CAH and NAH, particularly preferably NAH, for ease of production of the copolymer (B).

One type of Rx may be used alone, or two or more types of Rx may be used in combination.

Specific examples and preferred embodiments of the PAVE units in the copolymer (B) are the same as those of the PAVE units in the copolymer (A).

The copolymer (B) may include units based on a monomer (hereinafter also referred to as an "additional monomer") other than the above monomers. Specific examples and preferred embodiments of the additional monomer are the same as those of the additional monomer in the copolymer (A).

The copolymer (B) may have specific functional groups as main chain terminals. These functional groups can be introduced by appropriately selecting a radical polymerization initiator, a chain transfer agent or the like used in the production of the copolymer (B).

With a view to achieving the superior effects of the present invention, the content of the units having specific functional groups to all units in the copolymer (B) is preferably 0.01 to 3 mol%, more preferably 0.03 to 2 mol%, particularly preferably 0.05 to 1 mol%. In the case where NAH units are used as the units having specific functional groups, the preferable content range is the same as above.

The contents of the TFE units to all units in the copolymer (B) is preferably 90 to 99.89 mol%, more preferably 95 to 99.47 mol%, particularly preferably 96 to 98.95 mol%, with a view to achieving the superior effects of the present invention.

The content of the PAVE units to all units in the copolymer (B) is preferably 0.1 to 9.99 mol%, more preferably 0.5 to 4.97 mol%, particularly preferably 1 to 3.95 mol%, with a view to achieving the superior effects of the present invention. In the case where PPVE units are used as the PAVE units, the preferable content range is the same as above.

With a view to achieving the superior effects of the present invention, the content of the copolymer (B) is preferably 50 parts by mass or less, more preferably 30 parts by mass or less, still more preferably 25 parts by mass or less, particularly preferably 20 parts by mass or less, per 100 parts by mass of the copolymer (A).

The content of the copolymer (B) is preferably 0.5 parts by mass or more, more preferably 2 parts by mass or more, still more preferably 5 parts by mass or more, particularly preferably 7 parts by mass or more, per 100 parts by mass of the fluorine-containing copolymer (A), with a view to achieving the superior effects of the present invention.

When the content of the copolymer (B) falls within the above range, the storage modulus of the fluorine-containing copolymer composition at 100°C can be readily adjusted to 650 kPa or lower.

The melting point of the copolymer (B) is preferably 260 to 320°C, more preferably 280°C to 315°C, particularly preferably 295 to 310°C. When the melting point of the copolymer (B) is higher than or equal to the lower limit of the above range, crosslinked rubber articles formed from a crosslinkable composition that combines the present composition containing the copolymer (B) with a crosslinking agent achieves high heat resistance. When the melting point of the copolymer (B) is lower than or equal to the upper limit of the above range, the copolymer shows good processability, and crosslinked rubber articles formed from a crosslinkable composition that combines the present composition containing the copolymer (B) with a crosslinking agent achieve excellent surface smoothness.

The melting point of the copolymer (B) can be adjusted depending on the types of units constituting the copolymer (B), the contents of these units, the molecular weight of the copolymer, and the like. For example, the melting point of the copolymer (B) tends to become higher as the content of the TFE units increases.

### (Method for Producing Copolymer (B))

As an example of a method for producing the copolymer (B), a method may be mentioned in which the above-described monomers are copolymerized in the presence of a radical polymerization initiator. The details of this production method are as described in WO2016/017801.

### (Form)

In the present composition, the copolymer (B) is preferably contained in particulate form. In other words, the copolymer (B) is preferably in the form of resin particles containing the copolymer (B) in the present composition.

The resin particles may contain a polymer (hereinafter also referred to as the "other polymer") other than the copolymers (A) and (B). Examples of the other polymer include fluorine-containing copolymers other than the copolymers (A) and (B) (such as tetrafluoroethylene-fluoroalkyl vinyl ether copolymer, tetrafluoroethylene-hexafluoropropylene copolymer, and ethylene-tetrafluoroethylene copolymer), polytetrafluoroethylene, aromatic polyesters, polyamide-imides and thermoplastic polyimides.

The content of the copolymer (B) in the resin particles is preferably 80 to 100 mass%, more preferably 85 to 100 mass%, still more preferably 90 to 100 mass%, particularly preferably 100 mass%, based on the total mass of the resin particles.

The average particle size of the resin particles is preferably 0.02 to 50 µm, more preferably 0.02 to 35 µm, particularly preferably 0.02 to 10 µm, with a view to achieving the superior effects of the present invention.

The average particle size of the resin particle refers to a volume-based cumulative 50% size (D50) determined by the laser diffraction and scattering method. That is, a particle size distribution is measured by the laser diffraction and scattering method to obtain a cumulative curve with the total volume of a collection of particles set as 100%, and the particle size at which the cumulative volume reaches 50% on the cumulative curve is defined as D50.

The resin particles can be obtained by, for example, the method for producing resin particles or a resin powder as disclosed in WO2016/017801.

### <Specific Phosphorus Compound>

With a view to achieving the superior effects of the present invention, the present composition preferably contains a phosphorus compound having a melting point of 60°C or lower (hereinafter also referred to as a "specific phosphorus compound").

The melting point of the specific phosphorus compound is 60°C or lower. With a view to further enhancing the dispersibility of the specific phosphorus compound and thereby achieving the superior effects of the present invention, the melting point of the specific phosphorus compound is preferably 35°C or lower, particularly preferably 20°C or lower.

The specific phosphorus compound having a melting point lower than or equal to the above-specified temperature may be liquid at 20°C.

The boiling point of the specific phosphorus compound is preferably 50°C or higher, more preferably 100°C or higher, for handling ease of the specific phosphorus compound.

With a view to further enhancing the dispersibility of the specific phosphorous compound and thereby achieving the superior effects of the present invention, the specific phosphorous compound is preferably a phosphine or phosphine oxide having an alkyl group, more preferably a trialkylphosphine or a trialkylphosphine oxide, still more preferably a compound represented by the following formula (7) or (8), particularly preferably a compound represented by the following formula (7).

P(R⁷¹)₃ (7)

In the formula (7), R⁷¹ represents a C₂₋₉ linear or branched alkyl group. Three R⁷¹ may be the same as or different from one another, and are preferably the same as one another.

PO(R⁸¹)₃ (8)

In the formula (8), R⁸¹ represents a C₂₋₉ linear or branched alkyl groups Three R⁸¹ may be the same as or different from one another, and are preferably the same as one another.

The number of carbon atoms in R⁷¹ is 2 to 9, and is preferably 4 to 9, particularly preferably 6 to 8.

It is preferable that three R⁷¹ are each independently a C₂₋₉ linear alkyl group.

The number of carbon atoms in R⁸¹ is 2 to 9, and is preferably 4 to 9, particularly preferably 6 to 8.

It is preferable that three R⁸¹ are each independently a C₂₋₉ linear alkyl group.

Specific examples of the compound represented by the formula (7) include triethylphosphine (melting point: -86°C, liquid at 20°C, boiling point: 127 to 128°C), tri-n-propylphosphine (melting point: unknown, liquid at 20°C, boiling point: 72 to 74°C/12 mmHg), tri-n-butylphosphine (melting point: -65°C, liquid at 20°C, boiling point: 150°C/50 mmHg), tri-tert-butylphosphine (melting point: 30 to 35°C, liquid or solid at 20°C, boiling point:102°C/13 mmHg), tri-n-pentylphosphine (melting point: unknown, liquid at 20°C, boiling point: unknown), tri-n-hexylphosphine (melting point: unknown, liquid at 20°C, boiling point: 227°C/50 mmHg) and tri-n-octylphosphine (melting point: unknown, liquid at 20°C, boiling point: 175°C/0.3 mmHg).

Specific examples of the compound represented by the formula (8) include triethylphosphine oxide (melting point: 52°C, solid at 20°C), tri-n-propylphosphine oxide (melting point: 39°C, solid at 20°C), tri-n-hexylphosphine oxide (melting point: 34°C, solid at 20°C) and tri-n-octylphosphine oxide (melting point: 52°C, solid at 20°C).

Among these specific phosphorous compounds, tri-n-octylphosphine is preferred.

To suppress cracking in crosslinked rubber articles formed from a crosslinkable composition that combines the present composition with a crosslinking agent, the content of the specific phosphorous compound is preferably 0.01 parts by mass or more, more preferably 0.10 parts by mass or more, per 100 parts by mass of the copolymer (A). To achieve high releasability of crosslinked rubber articles formed from a crosslinkable composition that combines the present composition with a crosslinking agent, the content of the specific phosphorous compound is still more preferably 0.20 parts by mass or more.

With a view to achieving the superior effects of the present invention, the content of the specific phosphorous compound is preferably 5 parts by mass or less, more preferably 2 parts by mass or less, still more preferably 1.0 parts by mass or less, per 100 parts by mass of the copolymer (A).

### <Compound Represented by Formula (9)>

The present composition preferably contains a compound represented by the formula (9).

H₂C=CH-R⁹¹-R⁹³-R⁹²-CH=CH₂ (9)

In this formula, R⁹¹ and R⁹² each independently represents CH₂ or CF₂, and preferably is CH₂.

Further, R⁹³ represents a divalent C₁₋₁₀ fluorohydrocarbon group which may have an etheric oxygen atom at a terminal end or between carbon atoms thereof.

The fluorohydrocarbon group may be linear, branched or cyclic, and is preferably linear or branched, more preferably linear. The number of carbon atoms in R⁹³ is preferably 2 to 10, more preferably 3 to 8, still more preferably 3 to 6, particularly preferably 3 to 5.

The fluorohydrocarbon group is preferably a perfluorohydrocarbon group.

With a view to achieving the superior effects of the present invention, the content of the compound represented by the formula (9) is preferably 0.1 to 5 parts by mass, more preferably 1 to 3 parts by mass, per 100 parts by mass of the copolymer (A).

### <Additional Components>

The present composition may contain additional components other than the above components, within the range that does not impair the effects of the present invention. Examples of the additional components include: an acid acceptor (e.g., a fatty acid ester, a fatty acid metal salt, or a divalent metal oxide (such as magnesium oxide, calcium oxide, zinc oxide, or lead oxide)); a filler and reinforcing material (e.g., carbon black, barium sulfate, calcium metasilicate, calcium carbonate, titanium dioxide, silicon dioxide, a fluorine-containing copolymer other than the fluorine-containing copolymers (A) and (B) (such as tetrafluoroethylene-fluoroalkyl vinyl ether copolymer, tetrafluoroethylene-hexafluoropropylene copolymer or ethylene-tetrafluoroethylene copolymer), polytetrafluoroethylene (PTFE), aromatic polyester, polyamide-imide, thermoplastic polyimide, clay and talc); a scorch retarder (e.g., a phenolic hydroxyl group-containing compound such as bisphenol A, a quinone such as hydroquinone, or α-methylstyrene dimer such as 2,4-di(3-isopropylphenyl)-4-methyl-1-pentene); a crown ether (e.g., 18-crown-6) and a release agent (e.g., sodium stearate).

In the case where the present composition contains additional components, the total content of the additional components is preferably more than 0.1 parts by mass and 30 parts by mass or less, more preferably 1 to 15 parts by mass, particularly preferably 3 to 5 parts by mass, per 100 parts by mass of the copolymer (A).

However, the present composition contains no crosslinking agent.

As described later, a crosslinkable composition is obtained by combining the present composition with a crosslinking agent.

As a method for preparing the present composition, a method may be mentioned in which the above-described components are mixed. The mixing of the above-described components can be conducted using a rubber mixing machine such as a roll mill, a kneader, a Banbury mixer, an extruder or the like.

After obtaining the mixture of the above-described components, the mixture may be shaped as desired. Specific examples of the method for shaping the mixture include compression molding, injection molding, extrusion molding, calender molding, and dissolving the mixture in a solvent followed by dipping or coating a substrate with the resulting solution.

### <Storage Modulus>

The present composition exhibits a predetermined storage modulus.

As a device for measurement, any device capable of measuring the storage modulus may be used. An example of such a device is PREMIER RPA (manufactured by Alpha Technologies, die shape: D0380).

The measurement is preferably conducted using a sheet-shaped sample (thickness: approximately 3 mm) of the present composition.

The measurement procedure is as follows: a sheet-shaped sample of the present composition is held at 100°C for 2 minutes under the conditions of a frequency of 30 cpm and an oscillation angle of 0.2 deg, after which the oscillation angle is set to 0.5 deg and the frequency is increased to 10 cpm, 20 cpm and then 50 cpm. The storage modulus measured at a frequency of 50 cpm is taken as the storage modulus of the present composition.

The storage modulus of the present composition at 100°C is 650 kPa or lower. With a view to achieving the superior effects of the present invention, the storage modulus of the present composition at 100°C is preferably 50 to 600 kPa, particularly preferably 400 to 600 kPa.

### [Crosslinkable Composition (First Embodiment)]

A crosslinkable composition of the first embodiment of the present invention (hereinafter also referred to as the "present crosslinkable composition 1") is obtained by combining the present composition with a crosslinking agent. In other words, the present crosslinkable composition 1 contains the present composition and a crosslinking agent.

The present composition is as described above.

### <Crosslinking Agent>

As specific examples of the crosslinking agent, an organic peroxide and a compound having two or more amino groups (hereinafter also referred to as "polyamine compound") may be mentioned. From the viewpoint of high crosslinkability of the copolymer (A), a polyamine compound is preferred.

The polyamine compound may be a compound obtained by substituting hydrogen atoms of aliphatic hydrocarbon with amino groups, or may be a compound obtained by substituting hydrogen atoms of aromatic hydrocarbon with amino groups. With a view to achieving the superior effects of the present invention, preferred is a compound obtained by substituting hydrogen atoms of aromatic hydrocarbon with amino groups.

The polyamine compound preferably has a fluorine atom. In this case, the polyamine compound shows good compatibility with the copolymer (A).

Specific examples of the polyamine compound include hexamethylenediamine, hexamethylenediamine carbamate, 2,2-bis[4-(4-aminophenoxy)phenyl]propane, 2,2-bis(3-amino-4-hydroxyphenyl)propane, 2,2-bis(3-amino-4-hydroxyphenyl)hexafluoropropane (hereinafter also referred to as "BOAP"; also known as bisaminophenol AF), 2,2-bis(3,4-diaminophenyl)propane, 2,2-bis(3,4-diaminophenyl)hexafluoropropane, 2,2-bis(3-amino-4-(N-phenylamino)phenyl)hexafluoropropane, 4,4'-methylenedianiline, m-phenylenediamine, adipic acid dihydrazide, and compounds represented by the formula (XII) of Japanese Patent No. 5833657. Among these, BOAP is preferred with a view to achieving the superior effects of the present invention.

The content of the crosslinking agent in the present crosslinkable composition 1 is preferably 0.3 to 10 parts by mass, more preferably 0.3 to 5 parts by mass, particularly preferably 0.5 to 3 parts by mass, per 100 parts by mass of the copolymer (A). When the content of the crosslinking agent falls within the above range, the superior effects of the present invention can be achieved.

### [Crosslinkable Composition (Second Embodiment)]

A crosslinkable composition of the second embodiment of the present invention (hereinafter also referred to as the "present crosslinkable composition 2") contains a copolymer (A), a copolymer (B) and a crosslinking agent.

Furthermore, the present crosslinkable composition 2 exhibits a recovery of less than 80% in a recovery test after being held at 25% compression at 200°C for 70 hours.

A crosslinked rubber article formed from the present crosslinkable composition 2 is less likely to adhere to contacted objects.

The detailed reason for these predetermined effects of the present crosslinkable composition 2 is not clear, but is presumed as follows. In the case where a crosslinked rubber article formed from the present crosslinkable composition 2, containing the above predetermined components, exhibits a recovery less than the specified value, it readily returns to its original, unpressurized state upon release from applied pressure. A crosslinked rubber article with such properties, when used as a pressure-bearing part such as an O-ring, will readily return to its original shape upon release of pressure. As a result, the contact area between the crosslinked rubber article and contacted objects is reduced, thereby making the crosslinked rubber article less likely to adhere to contacted objects.

The definitions and preferred embodiments of the copolymer (A), the copolymer (B) and the crosslinking agent in the present crosslinkable composition 2 are the same as those described for the present composition and the present crosslinkable composition 1.

The content of the copolymer (A) in the present crosslinkable composition 2 is preferably 60 to 99 mass%, more preferably 70 to 95 mass%, particularly preferably 80 to 90 mass%, based on the total mass of the present crosslinkable composition 2.

With a view to achieving the superior effects of the present invention, the content of the copolymer (B) in the present crosslinkable composition 2 is preferably 50 parts by mass or less, more preferably 30 parts by mass or less, still more preferably 20 parts by mass or less, particularly preferably 15 parts by mass or less, per 100 parts by mass of the copolymer (A).

The content of the copolymer (B) in the present crosslinkable composition 2 is preferably 0.5 parts by mass or more, more preferably 2 parts by mass or more, still more preferably 5 parts by mass or more, particularly preferably 7 parts by mass or more, per 100 parts by mass of the copolymer (A) with a view to achieving the superior effects of the present invention.

The content of the crosslinking agent in the present crosslinkable composition 2 is preferably 0.3 to 10 parts by mass, more preferably 0.3 to 5 parts by mass, particularly preferably 0.5 to 3 parts by mass, per 100 parts by mass of the copolymer (A). When the content of the crosslinking agent falls within the above range, the superior effects of the present invention can be achieved.

The present crosslinkable composition 2 may contain components other than the copolymer (A), the copolymer (B) and the crosslinking agent. Examples of such components include the specific phosphorus component, the compound represented by the formula (9) and the "additional components" described above, each of which may be contained in the present composition.

To suppress cracking in crosslinked rubber articles formed from the present crosslinkable composition 2, the content of the specific phosphorus compound in the present crosslinkable composition 2 is preferably 0.01 parts by mass or more, more preferably 0.10 parts by mass or more, per 100 parts by mass of the copolymer (A). To achieve high releasability of crosslinked rubber articles formed form the present crosslinkable composition 2, the content of the specific phosphorus compound is still more preferably 0.20 parts by mass or more.

With a view to achieving the superior effects of the present invention, the content of the specific phosphorus compound in the present crosslinkable composition 2 is preferably 5 parts by mass or less, more preferably 2 parts by mass or less, still more preferably 1.0 parts by mass or less, per 100 parts by mass of the copolymer (A).

With a view to achieving the superior effects of the present invention, the content of the compound represented by the formula (9) in the present crosslinkable composition 2 is preferably 0.1 to 5 parts by mass, more preferably 1 to 3 parts by mass, per 100 parts by mass of the copolymer.

In the case where the "additional components" described above are contained in the present crosslinkable composition 2, the total content of the additional components is preferably more than 0.1 parts by mass and 30 parts by mass or less, more preferably 1 to 15 parts by mass, particularly preferably 3 to 5 parts by mass, per 100 parts by mass of the copolymer (A).

The crosslinked rubber article formed from the present crosslinkable composition 2 exhibits a recovery of less than 80% in a recovery test after being held at 25% compression at 200°C for 70 hours. With a view to achieving the superior effects of the present invention, the above-specified recovery is preferably 60% or less, particularly preferably 50% or less. The lower limit of the recovery is 0%.

The above-specified recovery varies depending on the content ratio of the copolymers (A) and (B), the contents of respective units in the copolymers (A) and (B), the content and type of the crosslinking agent, and the like.

Specifically, the recovery may be determined by the following method. A crosslinked rubber article as a test sample is held at 25% compression by a jig in an oven at 200°C for 70 hours, after which the test sample was taken out of the oven. The test sample held by the jig is left at room temperature for 24 hours. The jig is removed from the test sample and, after a lapse of 30 minutes, the thickness of the test sample is measured. The recovery rate determined by the following formula is taken as the recovery of the crosslinked rubber article. 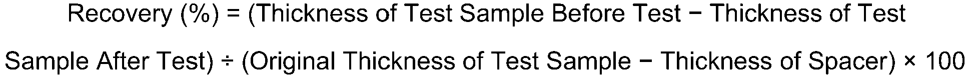 Recovery (%) = (Thickness of Test Sample Before Test - Thickness of Test Sample After Test) = (Original Thickness of Test Sample - Thickness of Spacer) × 100

The jig and measurement method used above are in compliance with ASTM-D395, except for the timing of removal of the jig.

### [Crosslinked Rubber Article]

A crosslinked rubber article of the present invention is an article formed from the above-described present crosslinkable composition (herein, the "present crosslinkable composition 1" and the "present crosslinkable composition 2" are collectively referred to simply as the "present crosslinkable composition").

As a method for crosslinking the copolymer (A) in the present crosslinkable composition, crosslinking by heating of the present crosslinkable composition is preferable.

Specific examples of such crosslinking by heating include hot-press crosslinking, steam crosslinking and hot-air crosslinking. Any of these methods can be appropriately selected in consideration of the form and applications of the present crosslinkable composition.

The heating conditions are preferably 100 to 400°C for 1 second to 24 hours.

The crosslinked rubber obtained by heating (primary crosslinking) the present crosslinkable composition may be further heated and thereby subjected to secondary crosslinking. By secondary crosslinking, the mechanical properties, compression set and other properties of the crosslinked rubber can be stabilized or improved.

The heating conditions for secondary crosslinking are preferably 80 to 350°C for 30 minutes to 48 hours.

The crosslinking may be performed by any method other than heating the present crosslinkable composition, such as applying radiation to the present crosslinkable composition. Specific examples of the radiation applied include an electron beam and an ultraviolet ray.

The crosslinked rubber article preferably exhibits an adhesion force of 23 kgf or less, more preferably 20 kgf or less, still more preferably 10 kgf or less. When the adhesion force of the crosslinked rubber article is 23 kgf or less, the crosslinked rubber article is less likely to adhere to movable members, such as doors and lids of semiconductor devices, thereby making it less likely that the movable members will be difficult to move.

The adhesion forth can be measured by the method described in the Examples below.

### <Applications>

The crosslinked rubber article is suitable as materials for O-rings, sheets, gaskets, oil seals, diaphragms, V-rings and the like. The crosslinked rubber article can also be used for various applications such as heat-resistant chemical-resistant sealing materials, heat-resistant oil-resistant sealing materials, wire sheath materials, sealing materials for semiconductor manufacturing equipment, sealing materials for liquid crystal display panel manufacturing equipment, sealing materials for light emitting diode manufacturing equipment, corrosion-resistant rubber paints, sealing materials for urea-resistant grease etc., rubber paints, adhesive rubber, hoses, tubes, calendered sheets (rolls), sponges, rubber rolls, oil drilling members, heat dissipation sheets, solution-crosslinked materials, rubber sponges, bearing seals (urea-resistant grease etc.), linings (resistant to chemical), insulating sheets for vehicles, insulating sheets for electronic devices, rubber bands for watches, endoscope packings (resistant to amine), bellows hoses (produced from calendered sheets), packings/valves for water heaters, fenders (for marine civil engineering and ships), fibers and non-woven fabrics (protective clothing etc.), sealing materials for substrates, rubber gloves, stators of single-screw eccentric pumps, parts for urea SCR systems, vibration isolators, damping materials, sealants, additives to other materials, and toys.

### EXAMPLES

The present invention will now be described in further detail with reference to Examples. Here, Ex. 4, 5 and 9 correspond to Examples of the present invention; and Ex. 1 to 3, 6 to 8 and 10 correspond to Comparative Examples. It should however be understood that the present invention is by no means restricted to these Examples. The amount of each component in the table below is expressed on a mass basis.

### [Composition Analysis of Fluorine-Containing Copolymers]

The contents (mol%) of respective units in the copolymers (A-1) to (A-4) described below were determined by ¹⁹F-nuclear magnetic resonance (NMR) analysis. However, the contents of propylene units were determined by ¹H- and ¹³C-nuclear magnetic resonance (NMR) analysis.

The contents (mol%) of respective units in the copolymer (B-1) described below were determined by melt NMR analysis and fluorine content analysis. However, the content of NAH units was determined by the following infrared adsorption spectrum analysis.

### (Infrared Adsorption Spectrum Analysis)

The copolymer (B-1) described below was press-formed into a film with a thickness of 200 µm. An infrared absorption spectrum of the film was measured, in which an absorption peak corresponding to NAH units in copolymer (B-1) appeared at 1778 cm⁻¹. The absorbance at the absorption peak was measured, and using the NAH molar absorptivity of 20810 mol⁻¹·I·cm⁻¹, the content of NAE units in copolymer (B-1) was determined from the measured absorbance.

### [Storage Modulus]

As a measurement device, PREMIER RPA (manufactured by ALFA Technologies, die shape: D0380) was used.

Using a fluorine-containing copolymer composition of each Ex., a sheet-shaped measurement sample having a thickness of 3 mm (weight: approximately 10 g) was prepared. The sheet-shaped measurement sample was sandwiched between polyester films (ALFA Technologies, PART#F0311-S, 130 mm × 130 mm × 24 µm). The measurement sample sandwiched between the polyester films was placed on a die. The temperature of the die was set to 100°C.

Next, the sheet-shaped measurement sample was held at 100°C for 2 minutes under the conditions of a frequency of 30 cpm and an oscillation angle of 0.2 deg, after which the oscillation angle was set to 0.5 deg and the frequency was increased to 10 cpm, 20 cpm and then 50 cpm. The storage modulus of the measurement sample at a frequency of 50 cpm was taken as the storage modulus of the fluorine-containing copolymer composition. The results are shown in the "Storage Modulus (kPa)" column of Table 1.

### [Recovery]

A crosslinked rubber article (O-ring (size: P-26) described below) was used as a test sample to evaluate its recovery.

More specifically, the crosslinked rubber article was held at 25% compression by a jig in an oven at 200°C for 70 hours. While being held by the jig, this test sample was taken out of the oven and left at room temperature for 24 hours. The jig was removed from the test sample and, after a lapse of 30 minutes, the thickness of the test sample was measured. The thickness recovery rate was evaluated as the recovery (%) of the crosslinked rubber article. The results are shown in the "Recovery (%)" column of Table 1. 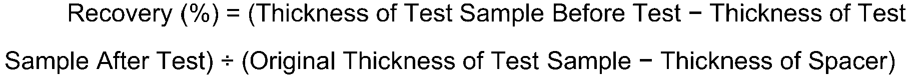 Recovery (%) = (Thickness of Test Sample Before Test - Thickness of Test Sample After Test) ÷ (Original Thickness of Test Sample - Thickness of Spacer)

The jig and measurement method used above were in compliance with ASTM D395, except for the timing of removal of the jig.

### [Adhesion]

An O-ring to be used was wiped with water, and an aluminum jig to be used was wiped with acetone.

The O-ring was compressed to a compression ratio of 25% by sandwiching it between two A6061 plates (aluminum plates) with a spacer (thickness: 2.625 mm), and was left at 200°C for 24 hours. The oven used herein was an inert gas oven (model: IHPS-222) manufactured by Tabai Espec.

The sample was taken out of the oven and cooled while being held at 25% compression. The pressure was then released, and the sample was left for 24 hours in a constant-temperature environment of 23°C and 50% relative humidity.

Thereafter, the aluminum plates were peeled apart using the equipment and test conditions described below, and the maximum point load (kgf) was taken as the adhesion force. The results are shown in the "Adhesion Force (kgf)" column of Table 1.
Test Conditions:
   Peeling speed: 5 mm/min
Equipment:
   Strograph manufactured by Toyo Seiki Seisakusho, Ltd.: STROGRAPH-R2
   Load cell: 981N RCT-100KR-AF
   Range: ×2

### [Preparation of Copolymer (A-1)]

A stainless steel pressure-resistant reactor equipped with an anchor stirrer and having an internal volume of 20 L was deaerated. In this reactor, 7.2L of ultrapure water, 880 g of a 30 mass% solution of C₂F₅OCF₂CF₂OCF₂COONH₄ as an emulsifier, 7.3 g of 8CNVE and 15.9 g of a 5 mass% aqueous solution of disodium hydrogen phosphate·dodecahydrate were charged, followed by replacing the gas phase with nitrogen. While stirring with the anchor stirrer at a rate of 375 rpm, 137 g of TFE and 635 g of PMVE were added into the reactor, and then, the temperature inside the reactor was increased to 80°C. The pressure inside the reactor was 0.90 MPa [gauge]. The polymerization was initiated with the addition of 28 mL of a 3 mass% aqueous solution of ammonium persulfate (APS). The molar ratio of the monomers added before the initiation of the polymerization (hereinafter also referred to as "initial monomers") was TFE: PMVE: 8CNVE = 26.3: 73.3: 0.4.

After the initiation of the polymerization, the monomers were added as follows with the progress of the polymerization. Hereinafter, the addition of the monomers after the initiation of the polymerization is also referred to as "subsequent addition", and the monomers added after the initiation of the polymerization are also referred to as "subsequent monomers".

When the pressure inside the reactor decreased to 0.89 MPa [gauge], TFE was added to increase the pressure inside the reactor to 0.90 MPa [gauge]. This operation was repeated, and upon every addition of 119.3 g of TFE, 3.7 g of 8CNVE, 74 g of PMVE and 3.7 g of 8CNVE were added in this order.

When the polymerization rate began to decrease, a 3 mass% aqueous solution of APS was added as appropriate. The total amount of the 3 mass% aqueous APS solution added after the initiation of the polymerization was 35 mL.

After the cycle in which the total mass of TFE added reached 1073.7 g, 119.3 g of TFE was further added. When the total mass of TFE subsequently added reached 1193 g, the addition of the subsequent monomers was stopped. The inside of the reactor was cooled to 10°C to terminate the polymerization reaction. With this, a latex containing a fluorine-containing copolymer was obtained. The polymerization time was 375 minutes. The total mass of the subsequent monomers added was 1193 g of TFE, 666 g of PMVE and 66.6 g of 8CNVE, corresponding to a molar ratio of TFE: PMVE: 8CNVE = 74.0: 25.0: 1.0.

The latex was added to a 5 mass% aqueous solution of aluminum potassium sulfate to cause aggregation and separation of the fluorine-containing copolymer. The fluorine-containing copolymer was filtered, washed with ultrapure water and vacuum dried at 50°C, thereby obtaining a white fluorine-containing copolymer (hereinafter also referred to as "copolymer (A-1)"). The contents of the respective units in the copolymer (A-1) were TFE units: PMVE units: 8CNVE units = 70.9: 28.6: 0.5.

### [Preparation of Copolymer (A-2)]

A copolymer (A-2) was obtained by the same procedure as described above in [Preparation of Copolymer (A-2)], except that the amount of the raw materials used were changed. The contents (molar ratio) of the respective units in the copolymer (A-2) were TFE units: PMVE units: 8CNVE units = 64.4: 35.1: 0.5.

### [Preparation of Copolymer (A-3)]

A stainless steel pressure-resistant reactor equipped with an anchor stirrer and having an internal volume of 20 L was deaerated. In this reactor, 8.2 L of ultrapure water, 733 g of a 30 mass% solution of C₂F₅OCF₂CF₂OCF₂COONH₄, 10.0 g of C3DVE and 15.9 g of a 5 mass% aqueous solution of disodium hydrogen phosphate·dodecahydrate were charged, followed by replacing the gas phase with nitrogen. While stirring with the anchor stirrer at a rate of 375 rpm, 198 g of TFE and 454 g of PMVE were added into the reactor after the temperature inside the reactor reached 80°C. The pressure inside the reactor was 0.90 MPa [gauge]. The polymerization was initiated with the addition of 40 mL of a 1 mass% aqueous solution of ammonium persulfate. The molar ratio of the monomers added before the initiation of the polymerization (hereinafter referred to as "initial monomers") was TFE: PMVE: C3DVE = 41.74: 57.64: 0.61.

When the pressure inside the reactor decreased to 0.89 MPa [gauge] with the progress of the polymerization, TFE was added to increase the pressure inside the reactor to 0.90 MPa [gauge]. This operation was repeated, and upon every addition of 80 g of TFE, 62 g of PMVE was added. Further, 7.0 g of 1,4-diiodoperfluorobutane was added from an ampoule, together with 50 mL of ultrapure water, into the reactor when 60 g of TFE had been added.

When the total amount of TFE added reached 1200 g, the addition of the monomers after the initiation of the polymerization (hereinafter referred to as "subsequent monomers") was stopped. The inside of the reactor was cooled to 10°C to terminate the polymerization. With this, a latex containing a fluorine-containing copolymer was obtained. The polymerization time was 360 minutes. The total mass of the subsequent monomers added was 1200 g of TFE and 868 g of PMVE, corresponding to a molar ratio of TFE: PMVE = 68: 32.

Nitric acid (special grade, manufactured by Kanto Chemical Co., Inc.) was dissolved in ultrapure water to prepare a 3 mass% aqueous solution of nitric acid. The latex was added to the aqueous nitric acid solution in a vessel made of TFE/perfluoro(alkyl vinyl ether) copolymer (PFA), to coagulate the fluorine-containing copolymer. The amount of the aqueous nitric acid solution used was 150 parts by mass per 100 parts by mass of the fluorine-containing copolymer in the latex. The coagulated fluorine-containing copolymer was recovered by filtration, added to ultrapure water in a PFA vessel and washed by stirring at 200 rpm for 30 minutes. The amount of ultrapure water used was 100 parts by mass per 100 parts by mass of the fluorine-containing copolymer. This washing was repeated ten times.

The washed fluorine-containing copolymer was recovered by filtration and vacuum-dried at 50°C under 10 kPa, thereby obtaining a copolymer (A-3). The molar ratio of the respective units in the copolymer (A-3) was TFE units: PMVE units: C3DVE units = 69.91: 29.96: 0.13, and the content of iodine atoms in the copolymer (A-3) was 0.10 mass%.

### [Preparation of Copolymer (A-4)]

A stainless steel pressure-resistant reactor equipped with an anchor stirrer and having an internal volume of 2100 mL was deaerated. In this reactor, 804 g of ultrapure water, 80.1 g of a 30 mass% solution of C₂F₅OCF₂CF₂OCF₂COONH₄, 0.72 g of C3DVE, 1.8 g of a 5 mass% aqueous solution of disodium hydrogen phosphate dodecahydrate and 0.87 g of 1,4-iodoperfluorobutane were charged, followed by replacing the gas phase with nitrogen. While stirring with the anchor stirrer at a rate of 600 rpm, 13 g of TFE and 65 g of PMVE were added into the reactor after the temperature inside the reactor reached 80°C. The pressure inside the reactor was 0.90 MPa [gauge]. The polymerization was initiated with the addition of 20 mL of a 1 mass% aqueous solution of ammonium persulfate. The molar ratio of the monomers added before the initiation of the polymerization (hereinafter referred to as "initial monomers") was TFE: PMVE: C3DVE = 25: 75: 0.19.

When the pressure inside the reactor decreased to 0.89 MPa [gauge] with the progress of the polymerization, TFE was added to increase the pressure inside the reactor to 0.90 MPa [gauge]. This operation was repeated, and upon every addition of 8 g of TFE, 7 g of PMVE was added.

When the total mass of TFE added reached 80 g, the addition of the monomers after the initiation of the polymerization (hereinafter referred to as "subsequent monomers") was stopped. The inside of the reactor was cooled to 10°C to terminate the polymerization reaction. With this, a latex containing a fluorine-containing copolymer was obtained. The polymerization time was 185 minutes. The total mass of the subsequent monomers added was 80 g of TFE and 63 g of PMVE, corresponding to a molar ratio of TFE: PMVE = 65: 35.

Nitric acid (special grade, manufactured by Kanto Chemical Co., Inc.) was dissolved in ultrapure water to prepare a 3 mass% aqueous solution of nitric acid. The latex was added to the aqueous nitric acid solution in a vessel made of TFE/perfluoro(alkyl vinyl ether) copolymer (PFA), to coagulate the fluorine-containing copolymer. The amount of the aqueous nitric acid solution used was 150 parts by mass per 100 parts by mass of the fluorine-containing copolymer in the latex.

The coagulated fluorine-containing copolymer was recovered by filtration, added to ultrapure water in a PFA vessel and washed by stirring at 200 rpm for 30 minutes. The amount of ultrapure water used was 100 parts by mass per 100 parts by mass of the copolymer. This washing was repeated ten times.

The washed fluorine-containing copolymer was recovered by filtration and vacuum-dried at 50°C under 10 kPa, thereby obtaining a white copolymer (A-4). The molar ratio of the respective units in the fluorine-containing copolymer (A-4) was TFE units: PMVE units: C3DVE units = 65.88: 33.94: 0.18, and the content of iodine atoms in the copolymer (A-4) was 0.15 mass%.

### [Preparation of Copolymer (B-1)]

A "fluorine-containing copolymer (X1-1)" disclosed in Example of WO2016/017801 was ground using a jet mill, and used as a copolymer (B-1). The molar ratio of the respective units in the copolymer (B-1) was NAH units: TFE units: PPVE units = 0.1: 97.9: 2.0.

The copolymer (B-1) was resin particles having a melting point of 310°C and an average particle size (D50) of 2 to 3 µm.

### [Ex. 1 to Ex. 10]

The components listed in Table 1 were mixed in the amounts (parts by mass) specified therein, and the resulting mixture was kneaded at room temperature for 10 minutes using a two-roll mill to obtain a fluorine-containing copolymer composition. Furthermore, the fluorine-containing copolymer composition was mixed with a crosslinking agent at room temperature for 10 minutes using a two-roll mill to obtain a crosslinkable composition according to the components and their blend amounts shown in Table 1. For example, in Ex. 4, the fluorine-containing copolymer composition was prepared by mixing the copolymer (A-2), the copolymer (B-1) and TOCP, and the crosslinkable composition was prepared by mixing the fluorine-containing copolymer composition and BOAP (crosslinking agent).

The resulting crosslinkable composition was formed into O-rings (size: P-26) by hot pressing (primary crosslinking) using a hydraulic press (model: SA-301 50T, manufactured by Tester Sangyo Co,. Ltd., ram diameter: 180 mm) under the following conditions. In each of Ex. 1 to 4 and 9, the primary crosslinking was performed by hot pressing at 180°C for 20 minutes. In each of Ex. 5 to 8, the primary crosslinking was performed by hot pressing at 150°C for 20 minutes. In Ex. 10, the primary crosslinking was performed by hot pressing at 170°C for 10 minutes.

Then, the O-ring was heated (secondary crosslinking) in a nitrogen atmosphere in an oven under the following conditions. In each of Ex. 1 to 4 and 9, the secondary crosslinking was performed by heating at 90°C for 2 hours, followed by increasing the temperature to 200°C over 2 hours, heating at 200°C for 4 hours, further increasing the temperature to 305°C over 2 hours, and heating at 305°C for 13 hours. In each of Ex. 5 to 8, the secondary crosslinking was performed by heating at 250°C for 4 hours. In Ex. 10, the secondary crosslinking was performed by heating at 200°C for 24 hours.

The O-rings were subsequently cooled to room temperature. By the procedure described above, the O-rings of Ex. 1 to Ex. 10 were obtained. These O-rings correspond to crosslinked rubber articles.

The obtained O-rings were measured for the above-mentioned properties. The measurement results are shown in Table 1.

The following is a summary of the components listed in Table 1, excluding the fluorine-containing copolymers (A-1) to (A-4) and (B-1).
Copolymer (A-5) (fluorine content: 66 mass%, median Mooney viscosity (ML1+10 121°C): 53, specific gravity: 1.83 g/cm³, Terpolymer FKM (TFE/VdF/HFP Copolymer))
TOCP: manufactured by Hokko Chemical Industry Co., Ltd., tri-n-octylphosphine (liquid at 20°C), specific phosphorus compound
C6-DV: manufactured by Tosoh Finechem Corporation, CH₂=CH-(CF₂)₆-CH=CH₂
TAIC: product name, manufactured by Mitsubishi Chemical Corporation, triallyl isocyanurate
BOAP: 2,2-bis(3-amino-4-hydroxyphenyl)hexafluoropropane, polyamine compound (crosslinking agent)
P-25B (PERHEXA 25B): product name, manufactured by NOF Corporation, 2,5-dimethyl-2,5-bis(tert-butylperoxy)hexane, organic peroxide (crosslinking agent)

**Table 1**

| Table 1 | | | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|---|
| | Copolymer | Copolymer (A-1) | 100 | 100 | | | | | | | | |
| | | Copolymer (A-2) | | | 100 | 100 | | | | | 100 | |
| | | Copolymer (A-3) | | | | | | 100 | | 100 | | |
| Fluorine-Containing Copolymer Composition (Measurement Sample) | | Copolymer (A-4) | | | | | 100 | 20 | 100 | | | |
| | | Copolymer (A-5) | | | | | | | | | | 100 |
| | | Copolymer (B-1) | | 20 | | 20 | 20 | | | | 20 | 20 |
| | Specific Phosphorus Compound | TOCP | | 0.2 | | 0.2 | | | | | | |
| | Compound Represented by Formula (9) | C6-DV | | | | | 2 | 2 | 2 | 2 | | |
| | Other Additive | TAIC | | | | | | | | | | 3 |
| Storage Modulus (kPa) | | | 425 | 655 | 398 | 570 | 647 | 743 | 450 | 587 | 525 | - |
| Crosslinkable Composition | Fluorine-Containing Copolymer (Total Amount) | | 100 | 120.2 | 100 | 120.2 | 122 | 122 | 102 | 102 | 120 | |
| | Crosslinking Agent | BOAP | 0.8 | 1.5 | 0.8 | 1.5 | | | | | 0.8 | |
| | | P-25B | | | | | 0.5 | 0.5 | 0.5 | 0.5 | | 3 |
| Recovery (%) | | | 80 | 80 | 50 | 50 | 70 | 80 | 70 | 80 | 50 | - |
| Adhesion Force (kgf) | | | 42 | 25 | 36 | 7 | 21 | 37 | 29 | 43 | 10 | - |

As shown in the table above, it has been confirmed that the effects of the present invention can be achieved through the use of the present composition.

The O-ring, when having an adhesion force of 23 kgf or less, was less likely to adhere to the aluminum plates in the adhesion measurement.

The O-ring of Ex. 10 was not separated from the aluminum plates in the adhesion measurement. A similar phenomenon was observed for the O-ring of Ex. 8.

The entire disclosure of Japanese Patent Application No. 2023-221216 filed on December 27, 2023, including specification, claims and summary, is incorporated herein by reference in its entirety.

## Claims

1. A fluorine-containing copolymer composition comprising:
a fluorine-containing copolymer (A) comprising units based on tetrafluoroethylene and units based on perfluoro(alkyl vinyl ether); and
a fluorine-containing copolymer (B), which is a fluorine-containing copolymer different from the fluorine-containing copolymer (A), comprising units based on a monomer having at least one functional group selected from the group consisting of a carboxy group and a group represented by the formula (X), units based on tetrafluoroethylene and units based on perfluoro(alkyl vinyl ether)
*-CO-O-CO-* (X)
where * represents a bonding position,
wherein the fluorine-containing copolymer composition has a storage modulus of 650 kPa or lower at 100°C.

2. The fluorine-containing copolymer composition according to Claim 1,
wherein the fluorine-containing copolymer (A) comprises units having nitrile groups, and
wherein the content of the units having nitrile groups to all units in the fluorine-containing copolymer (A) is 0.14 mol% or more and less than 0.7 mol%.

3. The fluorine-containing copolymer composition according to Claim 1 or 2,
wherein the content of the units based on the monomer having at least one functional group selected from the group consisting of a carboxy group and a group represented by the formula (X) to all units in the fluorine-containing copolymer (B) is 0.01 to 3 mol%,
wherein the content of the units based on tetrafluoroethylene to all units in the fluorine-containing copolymer (B) is 90 to 99.89 mol%, and
wherein the content of the units based on perfluoro(alkyl vinyl ether) to all units in the fluorine-containing copolymer (B) is 0.1 to 9.99 mol%.

4. The fluorine-containing copolymer composition according to Claim 1 or 2, further comprising a composition represented by the formula (9)
H₂C=CH-R⁹¹-R⁹³-R⁹²-CH=CH₂ (9)
where R⁹¹ and R⁹² each independently represent CH₂ or CF₂; and R⁹³ represents a divalent C₁₋₁₀ fluorohydrocarbon group which may have an etheric oxygen atom at a terminal end or between carbon atoms thereof.

5. The fluorine-containing copolymer composition according to Claim 4, wherein the content of the compound represented by the formula (9) is from 0.1 to 5 parts by mass per 100 parts by mass of the fluorine-containing copolymer (A).

6. The fluorine-containing copolymer composition according to Claim 1 or 2, further comprising a phosphorus compound having a melting point of 60°C or lower.

7. The fluorine-containing copolymer composition according to Claim 6, wherein the content of the phosphorus compound is 0.2 to 5 parts by mass per 100 parts by mass of the fluorine-containing copolymer (A).

8. The fluorine-containing copolymer composition according to Claim 1 or 2, wherein the content of the fluorine-containing copolymer (B) is 2 to 50 parts by mass per 100 parts by mass of the fluorine-containing copolymer (A).

9. A crosslinkable composition comprising: the fluorine-containing copolymer composition according to Claim 1; and a crosslinking agent.

10. The crosslinkable composition according to Claim 9, wherein the crosslinking agent is a compound having two or more amino groups.

11. The crosslinkable composition according to Claim 9, wherein the content of the crosslinking agent is 0.3 to 10 parts by mass per 100 parts by mass of the fluorine-containing copolymer (A).

12. A crosslinkable composition comprising:
a fluorine-containing copolymer (A) comprising units based on tetrafluoroethylene and units based on perfluoro(alkyl vinyl ether);
a fluorine-containing copolymer (B), which is a fluorine-containing copolymer different from the fluorine-containing copolymer (A), comprising units based on a monomer having at least one functional group selected from the group consisting of a carboxy group and a group represented by the formula (X): *-CO-O-CO-* where * represents a bonding position, units based on tetrafluoroethylene and units based on perfluoro(alkyl vinyl ether); and
a crosslinking agent,
wherein a crosslinked rubber article formed from the crosslinkable composition exhibits a recovery of less than 80% in a recovery test after being held at 25% compression at 200°C for 70 hours.

13. A crosslinked rubber article formed from the crosslinkable composition according to Claim 9 or 12.
